## Europäisches Patentamt
## European Patent Office
## Office européen des brevets

(19)

(11) Veröffentlichungsnummer: **0 009 117**
**A1**

(12) # EUROPÄISCHE PATENTANMELDUNG

(21) Anmeldenummer: 79102945.7

(22) Anmeldetag: 13.08.79

(51) Int. Cl.³: **G 02 B 5/14**

(30) Priorität: 14.09.78 DE 2840101

(43) Veröffentlichungstag der Anmeldung: 02.04.80
Patentblatt 80/7

(84) Benannte Vertragsstaaten: **AT BE CH FR GB IT LU NL SE**

(71) Anmelder: **SIEMENS AKTIENGESELLSCHAFT Berlin und München, Postfach 22 02 61, D-8000 München 22 (DE)**

(72) Erfinder: **Saatze, Kuno Dipl.-Ing., Wulfingstrasse 19, D-8080 Emmering (DE)**

(54) **Lösbare Verbindung, insbesondere Steckverbindung, zur Kopplung von mindestens zwei Lichtwellenleitern.**

(57) Die Erfindung bezieht sich auf eine lösbare Steckverbindung zur Kopplung von mindestens zwei Lichtwellenleitern. Bei bekannten Steckverbindungen sind die Enden der Lichtwellenleiter mit steckbaren Rundfassungen versehen. Das Aufbringen der Rundfassungen ist nur in einer Spezialwerkstätte möglich. Der Erfindung liegt die Aufgabe zugrunde, eine steckbare Verbindung zu schaffen, die auch am Einsatzort ohne besondere Hilfsmittel montiert werden kann. Die erfindungsgemäße Verbindung ist dadurch gekennzeichnet, daß die Enden der Lichtwellenleiter (2) in V-förmigen Nuten (3) der Endstücke (4) zentriert und mit Hilfe eines Klemmstückes (9) stirnseitig bündig geklemmt sind.

EP 0 009 117 A1

SIEMENS AKTIENGESELLSCHAFT          Unser Zeichen
Berlin und München                  VPA 78 P 7 1 1 8

Lösbare Verbindung, insbesondere Steckverbindung, zur
Kopplung von mindestens zwei Lichtwellenleitern

Die Erfindung bezieht sich auf eine lösbare Verbindung, insbesondere Steckverbindung, zur Kopplung von mindestens zwei Lichtwellenleitern, bei der die Enden der Lichtwellenleiter mit zusammensteckbaren Endstücken versehen sind und die Stirnflächen der Lichtwellenleiter bündig mit den gegeneinanderstoßenden Stirnflächen der Endstücke abschließen.

Bei derartigen Steckverbindungen ist es wichtig, daß die zu koppelnden Lichtwellenleiter nach dem Zusammenfügen der Endstücke genau ausgerichtet sind und mit ihren Stirnflächen möglichst dicht aneinanderstoßen, damit ein möglichst dämpfungsfreier Lichtübergang stattfinden kann.

Lösbare Steckverbindungen von Lichtwellenleitern sind in der Zeitschrift "Elektrisches Nachrichtenwesen" Bd. 51, No. 2, 1976, S. 90-96 beschrieben. Bei diesen bekannten

Hs 1 Kow / 11.9.1978

Steckverbindungen erfolgt die Ausrichtung und Zentrierung der Lichtwellenleiter über die mit Rundfassungen versehenen Endstücke. Die Zentrierung zylindrischer Fassungen erfordert indessen eine sehr hohe Fertigungsgenauigkeit, so daß solche Fassungen nur in einer Spezialwerkstätte montiert werden können. Außerdem erfordert die Zentrierung mehrerer parallel angeordneter Lichtwellenleiter in einer Fassung einen erheblichen fertigungstechnischen Aufwand.

Der Erfindung liegt die Aufgabe zugrunde, eine lösbare Verbindung, insbesondere Steckverbindung, der eingangs beschriebenen Art derart auszubilden, daß sie ohne besondere Hilfsmittel unmittelbar am Einsatzort montiert werden kann. Diese Aufgabe wird gemäß der Erfindung dadurch gelöst, daß die Enden der Lichtwellenleiter in V-förmigen Nuten der Endstücke zentriert und mit Hilfe eines Klemmstückes stirnseitig bündig geklemmt sind.

Vorzugsweise sind außer den V-förmigen Nuten für die Zentrierung und Klemmung der Lichtwellenleiter noch zusätzliche, in gleicher Richtung verlaufende Nuten für Zentrierstifte zur Führung und Zentrierung der zusammenzufügenden Endstücke vorgesehen, die vorzugsweise mit den gleichen Klemmstücken festklemmbar sind. Zum Ausgleich von Ferigungstoleranzen ist es zweckmäßig, daß die Enden der Lichtwellenleiter über eine elastische Zwischenlage geklemmt sind.

Es ist besonders vorteilhaft, wenn die Anzahl der zusätzlichen V-förmigen Nuten größer als die Anzahl der Zentrierstifte ist, da dadurch eine Codierung der Steckverbindung ermöglicht wird. Damit können Fehlkopplungen vollkommen ausgeschaltet werden, falls die Verbindung zeitweise gelöst werden muß.

Ein Ausführungsbeispiel der Erfindung ist in der Zeichnung

0009117

78 P 7 1 1 8

dargestellt und wird im folgenden näher beschrieben.
Es zeigen:

Figur 1 eine perspektivische Ansicht eines Endstückes der
           Verbindung,
Figur 2 bis 4 verschiedene Nutanordnungen.

Mit 1 ist ein dreiadriges Lichtwellenleiter-Kabel bezeichnet, dessen Lichtwellenleiter 2 in V-förmigen Nuten
3 eines Endstückes 4 angeordnet sind. Entsprechend der
Anzahl der Lichtwellenleiter 2 weist auch das Endstück 4
drei solcher Nuten 3 auf. Die Nuten 3 erstrecken sich
mindestens über die halbe Breite des Endstückes 4 und
münden in eine entsprechende Ausnehmung für das ummantelte Kabel 1, wobei jedoch der Durchmesser dieser
Ausnehmung geringer ist als der Durchmesser des Lichtwellenkabels 1, damit eine Kabelklemmung mit Hilfe eines
Klemmstückes 5 vorgenommen werden kann. Durch diese Kabelklemmung sollen die Lichtleiter 2 zugentlastet werden.

Die Lichtwellenleiter 2 werden unter Zwischenschaltung
einer elastischen Zwischenlage 6 mit Hilfe eines Klemmstückes 7 in den V-förmigen Nuten 3 des Endstückes 4
festgeklemmt. Hierbei schließen die Stirnflächen der
Lichtwellenleiter 2 bündig mit der Stirnfläche 8 des
Endstückes 4 und der Stirnfläche 8' des Klemmstückes 7
ab.

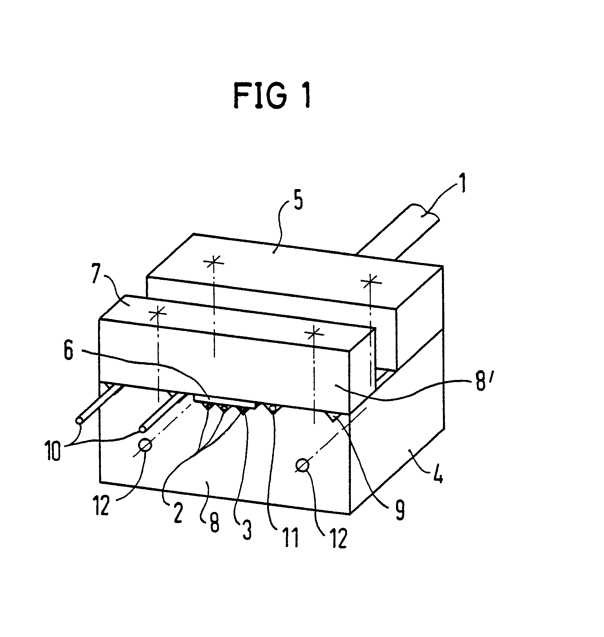

Außer den Nuten 3 weist das Endstück 4 weitere Nuten 9
auf, die parallel zu den Nuten 3 verlaufen. Wie aus
der Zeichnung zu ersehen ist, sind für jedes Endstück 4
vier solcher Nuten vorgesehen. In diese Nuten 9 sind
Zentrierstifte 10 (Führungs- und Codierstifte) mit Hilfe
der Klemmstücke 5 und 7 festgeklemmt. Im Gegensatz zu
den Nuten 3 sind die Nuten 9 durchgehend. Bei dem dargestellten Ausführungsbeispiel dienen diese Zentrierstifte 10 auch zur Codierung der Steckverbindung. Sie können am Einsatzort so in die Kopplungsstücke eingesetzt werden, daß eine Fehlkopplung nicht möglich ist. Während also bei dem in Figur 1 dargestellten Endstück 4 die beiden Zentrierstifte 10 nur auf einer Seite angeordnet sind, sind die entsprechenden Codierstifte bei dem zugehörigen in der Figur nicht dargestellten Endstück auf der anderen Seite paarweise angeordnet. Um die Zahl der Verbindungsmöglichkeiten zu erhöhen, kann die eine oder die andere Zentriernut 9 mit einem Blindstopfen 11 versehen sein. Die Anzahl und die Anordnung der Zentrierstifte 10 entspricht dann einem bestimmten Code.

Da mindestens zwei Zentrierstifte 10 vorgesehen sind, kann eine genaue Zentrierung der zusammenzufügenden Endstücke 4 bewirkt werden. Vorzugsweise werden die auf diese Weise zusammengefügten Endstücke 4 mit Hilfe einer Schraubverbindung zusätzlich gesichert. Auf einfache Weise können in entsprechenden Bohrungen 12 des Endstückes 4 Paßschrauben eingesetzt werden.

Die Montage der erfindungsgemäßen Verbindung kann in einfacher Weise derart erfolgen, daß die bereits freigelegten Enden der Lichtwellenleiter 2 in die Führungsnuten 3 so eingelegt werden, daß ihre Stirnflächen bündig mit den Stirnflächen 8 und 8' des Endstückes 4 bzw. Klemmstückes 7 abschließen. Dies ist durch die elastische Zwischenlage 6 leicht möglich, weil die das Klemmstück 7 haltenden Schrauben nicht voll angezogen zu werden brauchen. Danach werden in die Nuten 9 die entsprechenden Zentrierstifte 10 gesetzt und dann die Schrauben des Klemmstückes 7 fest angezogen. Anschließend kann das Klemmstück 5 für die Kabelklemmung befestigt werden.

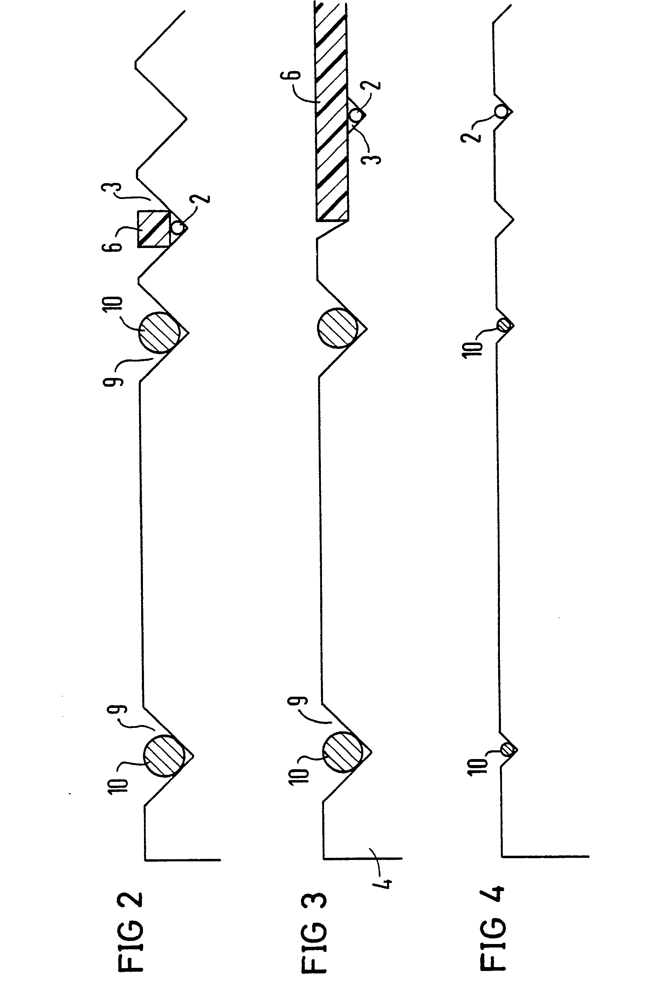

In Figur 2 bis 4 sind verschiedene Profile für die Endstücke 4 dargestellt. Bei allen Profilen sind die Nuten 3 und 9 in einer Aufspannung mit einem Fräswerkzeug hergestellt. Da die Nuttiefe dem Durchmesser der Lichtwellenleiter 2 bzw. dem Durchmesser der Zentrierstifte 10 angepaßt sein muß, ergeben sich für die Lichtwellenleiter 2 und die Zentrierstifte 10 meist zwangsläufig unterschiedliche Nuttiefen, da der Durchmesser der Führungs- und Zentrierstifte ein Mindestmaß nicht unterschreiten darf.

Wie Figur 2 zeigt, weisen die Nuten 3 für die Lichtwellenleiter 2 und die Nuten 9 für die Zentrierstifte 10 gleiche Nuttiefen auf. Dies ist ohne weiteres möglich, wenn der Durchmesser der Lichtwellenleiter 2 dem Durchmesser der Zentrierstife 10 entspricht, wie beispielsweise in Figur 4 dargestellt ist. Ist jedoch der Durchmesser der Zentrierstifte 10 erheblich größer als der Durchmesser der Lichtwellenleiter 2, so ist bei dem Lichtwellenleiter 2 eine elastische Zwischenlage 6 vorzusehen, wie Figur 2 zeigt.

Bei dem Ausführungsbeispiel nach Figur 3 weisen die Nuten 3 und 9 in Bezug auf die Oberfläche des Endstückes 4 gleiche Tiefe auf, jedoch ist das Endstück 4 im Bereich der Lichtwellenleiter mit einer einzigen elastischen Zwischenlage 6 fixiert werden können, wie Figur 1 und 3 zeigen.


7 Patentansprüche
4 Figuren

-1-

78 P 7 1 1 8

<u>Patentansprüche</u>

1. Lösbare Verbindung, insbesondere Steckverbindung, zur Kopplung von mindestens zwei Lichtwellenleitern, bei der die Enden der Lichtwellenleiter mit zusammensteckbaren Endstücken versehen sind und die Stirnflächen der Lichtwellenleiter bündig mit den gegeneinanderstoßenden Stirnflächen der Endstücke abschließen, dadurch g e k e n n - z e i c h n e t , daß die Enden der Lichtwellenleiter (2) in V-förmigen Nuten (3) der Endstücke (4) zentriert und mit Hilfe eines Klemmstückes (7) stirnseitig bündig geklemmt sind.

2. Verbindung nach Anspruch 1, dadurch g e k e n n - z e i c h n e t , daß außer den V-förmigen Nuten (3) für die Zentrierung und Klemmung der Lichtwellenleiter (2) noch zusätzliche, in gleicher Richtung verlaufende Nuten (9) für Zentrierstifte (10) zur Führung und Zentrierung der zusammenzufügenden Endstücke (4) vorgesehen sind, die vorzugsweise mit den gleichen Klemmstücken (5, 7) festklemmbar sind.

3. Verbindung nach Anspruch 2, dadurch g e k e n n - z e i c h n e t , daß die Anzahl der zusätzlichen V-förmigen Nuten (9) größer als die Anzahl der Zentrierstifte (10) ist und daß einzelne Nuten mit einem Blindstopfen (11) versehen sind.

4. Verbindung nach einem der Ansprüche 1 bis 3, dadurch g e k e n n z e i c h n e t , daß zusätzliche Klemmstücke (5) zur Klemmung der ummantelten Lichtwellenleiter (1) vorgesehen sind.

5. Verbindung nach Anspruch 1, dadurch g e k e n n - z e i c h n e t , daß die Enden der Lichtwellenleiter (2) über eine elastische Zwischenlage (6) geklemmt sind.

6. Verbindung nach einem der Ansprüche 1 bis 5, dadurch g e k e n n z e i c h n e t , daß die zusammengefügten Endstücke (4) durch eine Schraubverbindung gesichert sind.

7. Verbindung nach Anspruch 1, dadurch g e k e n n - z e i c h n e t , daß die Lichtwellenleiter (2) in die zusammengefügten Endstücke (4) und Klemmstücke (7) zusätzlich eingeklebt und die Stirnflächen gemeinsam bearbeitet sind.

**FIG 1**

FIG 2

FIG 3

FIG 4

| Europäisches Patentamt | **EUROPÄISCHER RECHERCHENBERICHT** | 0009117 Nummer der Anmeldung<br>EP 79 10 2945 |

| **EINSCHLÄGIGE DOKUMENTE** | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | BE - A - 866 576 (PLESSEY)<br>* Ansprüche; Figuren *<br><br>-- | 1,2,4,<br>5,6 | G 02 B 5/14 |
| P | FR - A - 2 406 211 (RADIALL)<br>* Seite 6, Zeilen 9-31; Figuren *<br><br>-- | 1,2,5 | |
| P | GB - A - 2 009 440 (C.G.E.)<br>* Zusammenfassung; Figur 3 *<br><br>-- | 1,5,6 | RECHERCHIERTE SACHGEBIETE (Int. Cl. 3) |
| P | NL - A - 79 00267 (SOURIAU)<br>* Ansprüche; Figur 1 *<br><br>---- | 1,2 | G 02 B 5/14 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-11-1979 | PFAHLER |

EPA form 1503.1 06.78